# EUROPEAN PATENT APPLICATION

(11) **EP 1 457 514 A1**
(43) Date of publication of application: **15.09.2004**
(21) Application number: 01960741.5
(22) Date of filing: 27.07.2001
(51) Int. Cl.: C08J 3/07, C08J 3/12, C08G 18/06, C08G 18/08, C08G 18/22, C08G 18/24, C08G 18/28, C08L 75/04, C09D 175/04

(54) **IONOMER POLYURETHANE THERMOPLASTIC**

(71) Applicant: Merquinsa Mercados Quimicos, S.L., 08160 Montmelo (ES)
(72) Inventor: AYUSO PIQUERAS, Jose, E-08160 Montmelo (ES); SALVATELLA RADRESA, Daniel, E-08160 Montmelo (ES); SESE SOLANO, José, E-08160 Montmelo (ES); JULIA BARGES, Joaquin, E-08160 Montmelo (ES)
(74) Representative: Primo de Rivera y Urquijo, Jose Antonio
(86) International application number: PCT/ES2001/000306
(87) International publication number: WO 2003/011949

(57) **Abstract**

New ionomeric thermoplastic polyurethanes (TPU) are described, obtainable by means of the reaction of aromatic or aliphatic diisocyanates, difunctional polyols, chain-extending glycols and anionic type ionomeric extending glycols at a high temperature and reduced time.

The obtained ionomeric TPUs can be handled, stored and transported and permit easily obtaining TPU ionomeric aqueous dispersions, useful in numerous applications, such as industrial adhesives and coatings for flexible and rigid substrates.

## Description

### Field of the invention

The present invention refers to a new ionomeric thermoplastic polyurethane that can be obtained and handled in solid form and which is susceptible to being easily transformed in an aqueous dispersion with an ionic character.

### State of the Art

Among those thermoplastic polyurethanes, those which are normally referred to by the initials TPU, the water dispersible ionomeric type, known for some time, are based on the incorporation of monomers having ionizable groups, both cationic, for example neutralizable or quaternizable tertiary amine groups, and anionic, for example free carboxylic or sulfonic groups susceptible to being neutralized with bases in an aqueous medium.

US Patent number 3,479,310, published in 1969, discloses said TPU type and a wide range of monomers incorporating ionizable moieties, although only specific TPU examples incorporating monomer units with cationic character groups are included, mainly N-methyl diethanol amine.

Said patent indicates that the monomer incorporating the ion group can be introduced in a prepolymer which is subsequently dispersed in an aqueous medium with the neutralizing agent, with the object of proceeding to its definitive polymerization. It also indicates that the polyurethane mass can be obtained, and once the polymerization has finished, add a water miscible organic solvent, acetone for example, and disperse the dissolved mass in water and a neutralizing agent to obtain the ready-to-use TPU aqueous dispersion once the organic solvent has been eliminated.

The ionomeric TPU aqueous dispersions have numerous fields of application, among which their use as industrial adhesives can be mentioned, for example in the footwear industry, and their use as coating materials for flexible substrates, such as fabrics and materials imitating the skin, and rigid substrates, such as in industrial paints and varnishes.

US Patent number 3,412,054 discloses water-dilutable polyurethanes by means of the reaction of polyisocyanates with hydroxylated carboxylic acids of the formula 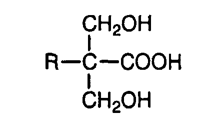 wherein R is hydrogen, hydroxymethyl or alkyl of up to 20 carbon atoms, 2,2-di(hydroxymethyl)propionic acid being mentioned as preferred, also known as 2,2-dimethylol propionic acid, or simply dimethylol propionic acid or DMPA.

These monomers are incorporated to the polyurethane by means of conventional processes disclosed in said patent, the water and neutralizing agent being incorporated in the final part of the process for obtaining the aqueous dispersions.

US Patent number 4,956,438 discloses that the monomer containing ion groups is incorporated to a prepolymer, neutralized in an aqueous medium, then proceeding to extend the polymer chain in said medium. In other words, the disclosed process directly leads to obtaining the TPU aqueous dispersion.

This technique, with different variants, is that which is normally used in manufacturing TPU dispersions, such as that also disclosed in US Patent number 5,155,163, disclosing the following process:
1) preparing the prepolymer by reaction of the diisocyanate, the polyol solvent and DMPA,
2) partial extension of the prepolymer with a low molecular weight diol, if desired
3) neutralizing the carboxylic groups with a base,
4) dispersing or emulsifying the polymer in water,
5) definitive chain extending with a low molecular weight diamine, and
6) adjusting the ratio of solids and the viscosity of the dispersion.

Thus, the disclosed technique indicates that the ionomeric TPU aqueous dispersions are obtained within an integrated polymerization process, or as a final step thereof, or by carrying out the dispersion in water and the neutralization on a prepolymer prior to the definitive extension of the polymer chains, this latter being the most commonly used technique.

This implies that the user of the TPU aqueous dispersions, which do not usually coincide with the manufacturer of the polymers, must acquire and store the prepared aqueous dispersions, which normally have large amounts of water, normally higher than 50% by weight, making the transport and storage thereof more costly and wears down the stability of the polymer.

US Patent number 4,276,044 discloses a solution for solving said drawback, focused on obtaining TPU aqueous solutions (not dispersions) and only applicable in a specific case from among the multiple applications of water dispersible TPUs, specifically in the finish of textiles. Said patent discloses polymers prepared as from the following monomers:
(a) organic diisocyanates with molecular weight of 160-300,
(b) tri- and/or tetra-ethylene glycol,
(c) optionally, other glycols with molecular weight of 62-200, and
(d) glycols with molecular weight lower than 500 containing carboxylic or sulfonic groups,
   in a ratio of NCO/OH equivalents lower than 1:1, the carboxylic or sulfonic groups being at least partially converted to carboxylate or sulfonate groups after the reaction, and characterized in that they contain
(e) from 25 to 40% by weight urethane groups,
(f) from 0.03 to 1.5% by weight hydroxyl groups,
(g) from 10 to 80 milliequivalents per 100 g carboxylate and/or sulfonate groups, and
(h) from 10 to 40% by weight incorporated tri- and/or tetra-ethylene glycol units, either between two urethane groups, or between a urethane group and a hydrogen.

These polymers contain a very high ratio of polar carboxylic and/or sulfonic groups and can be directly dissolved in water by means of adding a base, for their use in the finish for textiles. The patent indicates that the polymers object thereof can be obtained in the form of hardened resins that are easily water soluble, which can be stored and supplied to the final user so that said user can prepare the aqueous solution.

It is clear that the polymers disclosed in US patent number 4,276,044 do not alone constitute a solution to the posed drawback, although only for obtaining TPUs capable of forming aqueous solutions, not dispersions, with an application in a particular case from among the numerous fields of application of TPUs. Therefore, the drawback of finding alternative solutions that are also viable for their use in different fields of application of TPUs persists.

### Object of the Invention

Part of the object of the present invention are new ionomeric thermoplastic polyurethanes (TPU) susceptible to being stored and handled in solid form for the subsequent use thereof in the preparation of TPU aqueous dispersions, which have an application as industrial adhesives and as materials for coating flexible and rigid substrates.

Forming part of the object of the invention are also the following aspects thereof integrating the same inventive concept:
- a process for preparing the ionomeric TPUs object of the invention,
- the use of ionomeric TPUs of the invention for preparing aqueous dispersions, and
- a process for preparing aqueous dispersions from the ionomeric TPUs of the invention.

### Description of the Invention

The ionomeric thermoplastic polyurethane (TPU) object of the invention are characterized in that they are obtainable by means of the continuous reaction of the following monomers in the weight ratios indicated in reference to the total weight of the sum of the monomers prior to the reaction at a temperature comprised between 180ºC and 300ºC for a time comprised between 30 seconds and 5 minutes and in the absence of solvents:
(i) from 4% to 50% of an aliphatic or aromatic diisocyanate, or a mixture of aliphatic or aromatic diisocyanates;
(ii) from 35% to 95% of a difunctional polyol, or a mixture of difunctional polyols selected from:
   (a) a polycaprolactone with a mean molecular weight comprised between 500 and 15000 of the general formula (I) 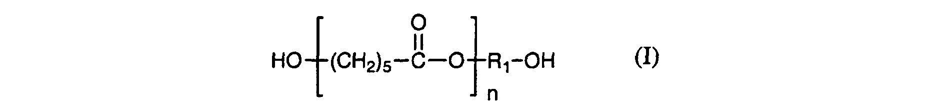 wherein n is an integer depending on the molecular weight and R₁ is a linear or branched C₂-C₁₀ alkylene group, eventually substituted with a carboxylic and/or sulfonic group and/or eventually substituted by an oxygen atom and/or a benzene or naphthalene ring,
   (b) a polyester diol with a mean molecular weight comprised between 500 and 15000 of general formula (II) 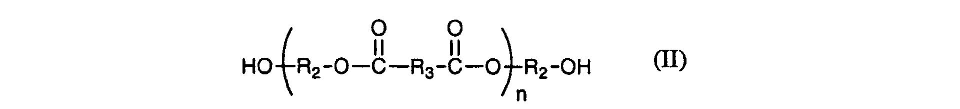 wherein n is an integer depending on the molecular weight and R₂ and R₃ indistinctively represent a linear or branched C₂-C₁₀ alkylene group, eventually substituted with a carboxylic and/or sulfonic group and/or eventually substituted by an oxygen atom and/or benzene or naphthalene ring,
   (c) a polyether diol selected from polypropylene glycol with a mean molecular weight comprised between 400 and 15000, polytetramethylene glycol with a mean molecular weight comprised between 500 and 15000, and polyethylene glycol with a mean molecular weight comprised between 500 and 5000,
   (d) a polycarbonate diol with a mean molecular weight comprised between 500 and 15000 of general formula (III) 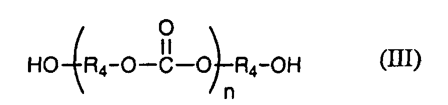 wherein n is an integer depending on the molecular weight and R₄ is a linear or branched C₂-C₁₀ alkylene group, eventually substituted with a carboxylic and/or sulfonic group and/or eventually substituted by an oxygen atom and/or a benzene or naphthalene ring, and
   (e) copolymers obtained by the reaction of at least two of the difunctional polyols of groups a), b), c) or d);
(iii) from 0.2% to 16% of a chain-extending glycol of general formula (IV)

   HO-R₅-OH, (IV)

   wherein R₅ is a linear or branched C₂-C₁₀ alkylene group, eventually interrupted by an oxygen atom and/or a benzene or naphthalene ring; and
(iv) from 0.2 to 3% of an anionic type ionomeric chain-extending glycol of general formula (V) 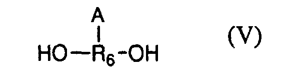
wherein R₆ is a linear or branched C₂-C₁₀ alkylene group, eventually substituted by a benzene or naphthalene ring, and A is an eventually neutralized carboxylic group or sulfonic group.

Evidently for a skilled person in the art, well known catalysts can be used in the polymerization reaction, such as salts from metals or metal complexes, preferably of tin or bismuth, with C₆-C₂₂ aliphatic carboxylic acids, for example tin octanoate. It is also evident for a skilled person in the art that antioxidants can be added to the reaction mixture, for example, those of the IRGANOX type, preferably those with a phenolic structure, and those of the TINUVIN type, preferably stearically hindered amines or benzatriazols.

The organic aliphatic and/or aromatic diisocyanates are well known by the skilled person in the chemistry of polyurethanes and they are available on the market. Those preferred for the purposes of the present invention are known as toluendiisocyanate (TDI), 4,4'-diphenyl methane diisocyanate (MDI), naphthalene diisocyanate, phenylene diisocyanate, xylene diisocyanate (XDI), tetramethylene xylene diisocyanate (TMXDI), isophoron diisocyanate (IPDI), 4,4'-dicyclohexyl methane diisocyanate (HMDI) and hexamethylene diisocyanate (HDI).
Preferably, the weight ratio of diisocyanate over the total weight of the monomers prior to the reaction is comprised between 4% and 15%, more preferably between 7% and 12%.

Polycaprolactones are known products among the difunctional polyols, which are obtained by means of the polymerization of ε-caprolactone in the presence of a diol-type initiator of formula HO-R₁-OH, wherein R₁ is the aforementioned groups. For the purposes of the present invention, the preferred cases are those in which R₁ is a linear C₂-C₆ alkylene group, most preferably butylene, although the other mentioned cases are possible.

The preferred polycaprolactones are those with a mean molecular weight comprised between 3000 and 10000.

Polyester diols are also well known by the skilled person in the art and are described in a number of patents, for example in column 4, lines 9 to 18, in US patent number 4,092,286, which is herein incorporated as a reference, those preferred being the polyester diols of general formula (II), wherein R₂ and R₃ indistinctively represent a C₂-C₁₀ alkylene group, most preferably butylene.

The preferred polyester diols are those with a mean molecular weight comprised between 3000 and 10000.

The also known polycarbonates are obtained by means of the reaction of alkyl or diaryl carbonates, or also those of phosgene, with diols of formula HO-R₄-OH, wherein R₄ represents the aforementioned groups. For the purposes of the present invention, the preferred cases are those in which R₄ is hexamethylene, although the other mentioned cases are possible.

The preferred polycarbonates are those with a mean molecular weight comprised between 1500 and 2500.

Among the copolymers obtained by means of the reaction of at least two of the difunctional polyol types a) to d), the preferred copolymers are those of polycaprolactone with polyethers or with polycarbonates. In this regard, the polyether-polycaprolactone block copolymers disclosed in Spanish patent application ES213499-A1 can be mentioned.

For the purposes of the present invention, only one of the previously explained difunctional polyol types a) to e), or mixtures thereof, can be used, the use of at least one polycaprolactone being especially preferred.

Preferably, the weight ratio of the difunctional polyol or polyols with regard to the total weight of the monomers used is comprised between 80% and 95%, more preferably between 85% and 93%.

Among the chain-extending glycols, well known in the chemistry of polyurethanes, those preferred for the purposes of the present invention are those selected from among 1,4-butanediol, 1,3-propanediol, 1,2-ethanediol, 1,6-hexanediol and dipropylene glycol, or mixtures thereof.

Preferably, the chain-extending glycols are in a weight ratio comprised between 0.2% and 2.0% with regard to the total weight of the monomers used.

The anionic type chain-extending ionomeric glycols are well known monomers in the chemistry of water dispersible polyurethanes, and sufficient descriptions and the chemical structure thereof are found in the aforementioned US patent numbers 3,479,310, 3,412,054 and 4,276,044, incorporated herein as a descriptive reference.

Among the glycols incorporating carboxylic groups, those preferred for the purposes of the present invention are 2,2-dimethylol propionic acid (DMPA) and 2,2-dimethylol butyric acid, whereas among those incorporating sulfonic acids, those preferred are 1,4-dihydroxy-2-butane sulfonic acid and 3,4-dihydroxy-1-butane sulfonic acid. DMPA is especially preferred.

Eventually, the carboxylic and sulfonic groups of the ionomeric glycols can be neutralized with a counter-anion, for example with tertiary aliphatic amines with a C₁-C₆ chain, aromatic amines and heterocyclic compounds such as morpholine and piperidine.

The preferable weight ratio of the ionomeric glycol with regard to the total weight of the reacting monomers is comprised between 0.5% and 2%.

In the case that one of the difunctional polyols used contained ionizable carboxylic or sulfonic groups, the ratio of extending ionomeric glycols is adjusted so that the total of the ionizable anion moieties of the finished polymer does not exceed what the same would contain in the case that the single monomer containing them were the ionomeric glycol and said glycol were at a weight ratio of 3% with regard to the total weight of the reacting monomers, preferably not higher than 2%.

The polymerization reaction temperature is preferably maintained between 190º C and 260º C, more preferably between 235º C and 250º C. The reaction time, which equals the continuous residence time of the mass in the reactor, is preferably comprised between 30 seconds and 3 minutes, more preferably between 1 and 2 minutes.

Once the reaction has finished, the product is cut or molded in a melted state, such that it hardens in the desired shape when cooled. It is preferred to carry out a hot extrusion at a temperature that permits cutting the mass in the form of pearls which, when cooled, harden and acquire a transparent or opaque aspect, depending on the nature of the TPU.

Object of the invention are those ionomeric TPUs whose features significantly coincide with those obtained by means of the reaction conditions and the aforementioned monomers, therefore the TPUs that were eventually obtained by means of another type of process, for example discontinuous batch processes, also form part of the object of the invention in the case that said TPUs significantly coincide with said features.

Also object of the invention is a process for preparing the previously described ionomeric TPUs, which is characterized in that it comprises the following steps:
(A) mixing the different monomers in a continuous reactor, in the absence of solvents, in the presence of a polymerization catalyst and at a temperature comprised between 180º C and 300º C,
(B) keeping the residence time of the reaction mass in the continuous reactor for a time interval comprised between 30 seconds and 5 minutes, and
(C) shaping and cooling the obtained product.

The reaction temperature is preferably kept between 190º C and 260º C, more preferably between 235º C and 250º C. The residence time of the mass in the continuous reactor is preferably comprised between 30 seconds and 3 minutes, more preferably between 1 and 2 minutes.

The polymerization catalyst is preferably a tin or bismuth salt with a C₆-C₂₂ aliphatic carboxylic acid, for example tin octanoate.

It is also preferred to add an antioxidant to the reaction mixture, for example those of the IRGANOX type, preferably those with a phenolic structure, and those of the TINUVIN type, preferably stearically hindered amines or benzotriazoles.

The reaction can be carried out in a twin screw extruder with the shape of a reactor, regulating its rotational speed such that the advance of the reaction mass permits the previously mentioned residence times.

The product can be extruded and cut at a temperature comprised between 180º C and 230º C, depending on the mean molecular weight thereof, in order to obtain hardened pearls after cooling and consisting of a transparent or opaque aspect.

The thus obtained ionomeric TPUs object of the invention can be handled, stored, for example in bags, drums or boxes, and transported with no problems, since they have a structure, hardness and stability that are very suitable for this.

Aqueous dispersions can be easily obtained from said ionomeric TPUs, in which the free carboxylic and/or sulfonic moieties are at least partially neutralized with a base, having an application in different industrial fields, such as adhesives and coating for flexible and rigid surfaces.

Said dispersions have the aspect of a whitish or bluish translucent liquid with a solid content comprised between 30% and 60% by weight, preferably between 35% and 55% by weight, and with a pH comprised between 6 and 10, preferably between 7 and 9.

The process for preparing the ionomeric TPU aqueous dispersions object of the invention is characterized in that it comprises the following steps:
(A) dissolving the TPU in a water miscible organic solvent, heating if necessary to obtain dissolution,
(B) adding water and an inorganic or organic base in a sufficient quantity so that the pH of the final obtained dispersion is comprised between 6 and 10,
(C) distilling the organic solvent and adding more water until obtaining a dispersion with a solid content comprised between 30% and 60% by weight.

The water miscible organic solvent can be any which, maintaining said condition, is capable of dissolving the ionomeric TPU, even with heat. Although this indication is enough for the skilled person in the art, acetone, tetrahydrofurane, pyrrolidone and dimethylformamide can be mentioned among other solvents, acetone being the preferred solvent for the purposes of the present invention.

The amount of organic solvent to be used in each case will depend on factors such as the composition of the monomers of the polymer and the molecular weight thereof, but in any case, it must be enough to obtain a practically complete dissolution, even with heat.

The base in step (B) is preferably added dissolved in the water and can be an organic or inorganic type. Among those organic bases, those which can be mentioned, among others, without going into great detail, are C₁-C₆ chain aliphatic amines, such as triethylamine, eventually hydroxylated, aromatic amines and the heterocyclic compounds such as morpholine and piperidine. Among the inorganic bases, ammonium hydroxides or alkaline and/or alkaline-earth metal hydroxides, for example sodium hydroxide, potassium hydroxide or ammonium hydroxide, can be mentioned, and also base-character salts, carbonates and bicarbonates of alkaline metals being among those that can be mentioned, for example sodium or potassium carbonates.

The amount of base to be added depends on the pH one wishes to obtain in the aqueous dispersion, being preferable an amount of base providing a pH in the final product comprised between 7 and 9. If desired, buffering systems can be added that help set the pH in the desired zone.

Once the neutralization reaction has finished, the organic solvent is eliminated by means of distillation, which is aided by the choice of a solvent with a relatively low boiling point, such as acetone.

Once the solvent is eliminated, more water is added to complete the volume, eventually together with a non-ionic surfactant, up to reaching a dispersion with the desired solid content, preferably comprised between 35% and 55% by weight.

The examples which follow below are explained for the purpose of providing a sufficiently clear and complete explanation of the present invention for the skilled person in the art, but they should not be considered limiting of the essential aspects of the object thereof, as they have been explained in the previous sections of this description.

### Examples

### Examples 1 to 5 Obtaining ionomeric TPUs

### a) General synthesis method

The different monomers are mixed in a twin screw extruder with the shape of a reactor, provided with heating, at a temperature comprised between 235º C and 250º, and from 20 to 200 ppm over the total weight of tin octanoate, in the case that an aromatic diisocyanate is used, or from 300 to 500 ppm of the same catalyst in the case that an aliphatic diisocyanate is used. If desired, a small amount of an IRGANOX type antioxidant is added, preferably with a phenolic structure, or of the TINUVIN type, preferably stearically hindered amines or benzotriazoles.

The mass is made to advance through the reactor by means of the rotational speed, maintaining the previously indicated temperature, such that the residence time of the reaction mass in the reactor is comprised between 1 and 2 minutes.

At the outlet of the extruder, the product is cut in the shape of pearls, cooled and dried, it therefore being possible to proceed to the packaging and storage thereof.

### b) Obtained ionomeric TPUs

Following the previously explained general synthesis method, the ionomeric TPUs of examples 1 to 5 are prepared, which are obtained from the monomers detailed in table 1.

**Table 1.-**

| Examples 1 to 5 | | | | | |
|---|---|---|---|---|---|
| Monomer | Ex. 1 (kg) | Ex. 2 (kg) | Ex. 3 (kg) | Ex. 4 (kg) | Ex. 5 (kg) |
| 4,4'-Diphenyl methane diisocyanate (MDI) | 454 | 450 | 530 | 350 | --- |
| Isophoron diisocyanate (IPDI) | --- | --- | --- | --- | 407 |
| Polycaprolactone with mean molecular weight 3800 (formula I, R₁= butylene) | 3800 | --- | --- | --- | 3800 |
| Polycaprolactone with mean molecular weight 5000 (formula I, R₁= butylene) | --- | 5000 | 5000 | 3070 | --- |
| Polyethylene glycol with mean molecular weight 600 | --- | --- | 175 | --- | --- |
| Polycarbonate with mean molecular weight 2000 (formula III, R₄= hexylene) | --- | --- | --- | 500 | --- |
| 1,4-butanediol | 36.4 | 18.9 | 23.1 | 10.8 | 36.4 |
| 2,2-dimethylol propionic acid (DMPA) | 58.5 | 85 | 78.2 | 64.4 | 58.5 |
| TINUVIN antioxidant | 4 | 5 | 5 | 3 | 3,8 |

### Examples 6 to 10 Obtaining the aqueous dispersions

### a) General preparation method

Acetone is introduced in a suitable reactor, provided with heat, reflux condenser and distillation system, and next, while stirring, the TPU pearls obtained in examples 1 to 5 are introduced. It is heated up to the acetone reflux temperature and the stirring continues until obtaining the complete dissolution. Next, water in which sodium hydroxide has been dissolved is added to the dissolution and the neutralization reaction is maintained for another hour between 50 and 60º C.

Once the neutralization has finished, the acetone is distilled, and while the acetone is distilled, more water is added in which a non-ionic surfactant was previously dissolved, preferably polyoxyethylenated of 80 moles of ethylene oxide, at the same speed with which the acetone is distilled.

An ionomeric TPU aqueous dispersion is obtained in this manner having a pH comprised between 6 and 10 and is a bluish-white color.

### b) Obtained ionomeric TPU dispersions

Following the previous general method, with the amounts of reagents and solvents indicated, the dispersions of examples 6 to 10 explained in table 2 are prepared.

**Table 2.-**

| Examples 6 to 10 | | | | | |
|---|---|---|---|---|---|
| Reagents and solvents | Ex. 6 (kg) | Ex. 7 (kg) | Ex. 8 (kg) | Ex. 9 (kg) | Ex. 10 (kg) |
| Acetone | 9000 | 11500 | 10500 | 9000 | 9000 |
| TPU example 1 | 3000 | --- | --- | --- | --- |
| TPU example 2 | --- | 3000 | --- | --- | --- |
| TPU example 3 | --- | --- | 3000 | --- | --- |
| TPU example 4 | --- | --- | --- | 3000 | --- |
| TPU example 5 | --- | --- | --- | --- | 3000 |
| De-ionized water (1) | 680 | 680 | 680 | 680 | 680 |
| Sodium hydroxide | 11.7 | 13.3 | 11.5 | 13.7 | 11.9 |
| De-ionized water (2) | 4500 | 4500 | 4500 | 4500 | 4500 |
| Non-ionic surfactant | 60 | 60 | 60 | 60 | 60 |

## Claims

1. An ionomeric thermoplastic polyurethane **characterized in that** it is obtainable by means of the continuous reaction, at a temperature comprised between 180º C and 300º C for a time comprised between 30 seconds and 5 minutes and in the absence of solvents, of the following monomers, in the weight ratios indicated in reference to the total weight of the sum of monomers prior to the reaction:
(i) from 4% to 50% of an aliphatic or aromatic diisocyanate, or a mixture of aliphatic or aromatic diisocyanates;
(ii) from 35% to 95% of a difunctional polyol, or a mixture of difunctional polyols selected from:
a) a polycaprolactone with a mean molecular weight comprised between 500 and 15000 of general formula (I) 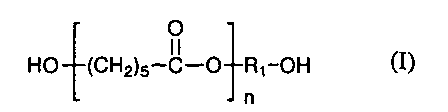 wherein n is an integer depending on the molecular weight and R₁ is a linear or branched C₂-C₁₀ alkylene group eventually substituted with a carboxylic and/or sulfonic group and/or eventually substituted with an oxygen atom and/or a benzene or naphthalene ring,
b) a polyester diol with a mean molecular weight comprised between 500 and 15000 of general formula (II) 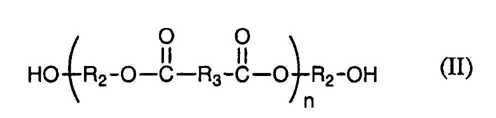 wherein n is an integer depending on the molecular weight and R₂ and R₃ indistinctively represent a linear or branched C₂-C₁₀ alkylene group eventually substituted with a carboxylic and/or sulfonic group and/or eventually substituted with an oxygen atom and/or a benzene or naphthalene ring,,
c) a polyether diol selected from polypropylene glycol with a mean molecular weight comprised between 400 and 15000, polytetramethylene glycol with a mean molecular weight comprised between 500 and 15000, and polyethylene glycol with a mean molecular weight comprised between 500 and 5000,
d) a polycarbonate diol with a mean molecular weight comprised between 500 and 15000 of general formula (III) 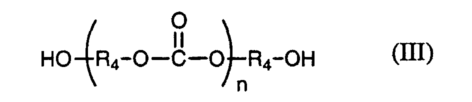 wherein n is an integer depending on the molecular weight and R₄ is a linear or branched C₂-C₁₀ alkylene group, eventually substituted with a carboxylic and/or sulfonic group and/or eventually substituted with an oxygen atom and/or a benzene or naphthalene ring, and
e) copolymers obtained by reaction of at least two of the difunctional polyols from groups a), b), c) or d);
(iii) from 0.2% to 16% of a chain-extending glycol of general formula (IV)
HO-R₅-OH, (IV)
wherein R₅ is a linear or branched C₂-C₁₀ alkylene group, eventually substituted with an oxygen atom and/or a benzene or naphthalene ring; and
(iv) from 0.2 to 3% of an anionic type ionomeric chain-extending glycol of general formula (V) 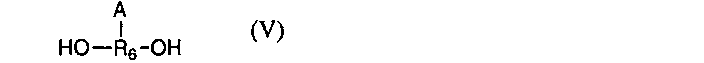 wherein R₆ is a linear or branched C₂-C₁₀ alkylene group, eventually substituted with a benzene or naphthalene ring, and A is an eventually neutralized carboxylic group or an eventually neutralized sulfonic group.

2. An ionomeric thermoplastic polyurethane according to claim 1, **characterized in that** a polymerization catalyst is added in the continuous reaction, consisting of a metal salt or metal complex, preferably of tin or bismuth, with C₆-C₂₂ aliphatic carboxylic acids.

3. An ionomeric thermoplastic polyurethane according to claims 1 or 2, **characterized in that** in the continuous reaction, an IRGANOX type antioxidant is added, preferably with a phenolic structure, or a TINUVIN type antioxidant, preferably stearically hindered amines or benzotriazoles.

4. An ionomeric thermoplastic polyurethane according to any of claims 1 to 3, **characterized in that** the diisocyanate is selected from toluendiisocyanate (TDI), 4,4'-diphenyl methane diisocyanate (MDI), naphthalene diisocyanate, phenylene diisocyanate, xylene diisocyanate (XDI), tetramethylene xylene diisocyanate (TMXDI), isophoron diisocyanate (IPDI), 4,4'-dicyclohexyl methane diisocyanate (HMDI) and hexamethylene diisocyanate (HDI).

5. An ionomeric thermoplastic polyurethane according to claims 1 or 4, **characterized in that** the weight ratio of diisocyanate over the total weight of the monomers prior to the reaction is comprised between 4% and 15%, preferably between 7% and 12%.

6. An ionomeric thermoplastic polyurethane according to any of claims 1 to 5, **characterized in that** in the polycaprolactone of general formula (I), R₁ is a linear or branched C₂-C₆ alkylene group, preferably butylene.

7. An ionomeric thermoplastic polyurethane according to claims 1 or 6, **characterized in that** the polycaprolactone has a mean molecular weight comprised between 3000 and 10000.

8. An ionomeric thermoplastic polyurethane according to any of claims 1 to 7, **characterized in that** in the polyester diol of general formula (II), R₂ and R₃ indistinctively represent a C₂-C₁₀ alkylene group, preferably butylene.

9. An ionomeric thermoplastic polyurethane according to claims 1 or 8, **characterized in that** the polyester diol has a mean molecular weight comprised between 3000 and 10000.

10. An ionomeric thermoplastic polyurethane according to any of claims 1 to 9, **characterized in that** in the polycarbonate diol of general formula (III), R₄ is hexamethylene.

11. An ionomeric thermoplastic polyurethane according to claims 1 or 10, **characterized in that** the polycarbonate diol has a mean molecular weight comprised between 1500 and 2500.

12. An ionomeric thermoplastic polyurethane according to any of claims 1 to 11, **characterized in that** the copolymers obtained by the reaction of at least two of the difunctional polyols are polycaprolactone copolymers with polyethers or with polycarbonates.

13. An ionomeric thermoplastic polyurethane according to any of the previous claims, **characterized in that** with regard to the total weight of the monomers used, the weight ratio of the difunctional polyol or polyols is comprised between 80% and 95%, preferably between 85% and 93%.

14. An ionomeric thermoplastic polyurethane according to any of claims 1 to 13, **characterized in that** the difunctional polyol is a polycaprolactone, alone or in a mixture with one of the other difunctional polyols.

15. An ionomeric thermoplastic polyurethane according to any of the previous claims, **characterized in that** the chain-extending glycol is selected from 1,4-butanediol, 1,2-ethanediol, 1,3-propanediol, 1,6-hexanediol and dipropylene glycol, or mixtures thereof.

16. An ionomeric thermoplastic polyurethane according to any of the previous claims, **characterized in that** the chain-extending glycol is in a weight ratio comprised between 0.2% and 2.0% with regard to the total weight of the monomers.

17. An ionomeric thermoplastic polyurethane according to any of the previous claims, **characterized in that** the anionic type ionomeric chain-extending glycol is selected from 2,2-dimethylol propionic acid (DMPA), 2,2- dimethylol butyric acid, 1,4-dihydroxy-2-butane sulfonic acid and 3,4-dihydroxy-1-butane sulfonic acid.

18. An ionomeric thermoplastic polyurethane according to claim 17, **characterized in that** the ionomeric chain-extending glycol is 2,2-dimethylol propionic acid (DMPA).

19. An ionomeric thermoplastic polyurethane according to any of the previous claims, **characterized in that** the weight ratio of ionomeric glycol with regard to the total weight of the monomers is comprised between 0.5% and 2%.

20. An ionomeric thermoplastic polyurethane according to any of the previous claims, **characterized in that** the reaction temperature is maintained between 190º C and 260º C, preferably between 235º C and 250º C, and the reaction time is comprised between 30 seconds and 3 minutes, preferably between 1 and 2 minutes.

21. An ionomeric thermoplastic polyurethane according to any of the previous claims, **characterized in that** it has the form of hardened pearls with a transparent or opaque aspect.

22. A process for preparing the ionomeric thermoplastic polyurethanes of claims 1 to 21, **characterized in that** it comprises the following steps:
(A) mixing the different monomers in a continuous reactor, in the absence of solvents, in the presence of a polymerization catalyst and at a temperature comprised between 180º C and 300º C,
(B) keeping the residence time of the reaction mass in the continuous reactor for a time interval comprised between 30 seconds and 5 minutes, and
(C) shaping and cooling the obtained product.

23. A process according to claim 22, **characterized in that** the reaction temperature is maintained between 190º C and 260º C, preferably between 235º C and 250º C, and the residence time of the mass in the continuous reactor is comprised between 30 seconds and 3 minutes, preferably between 1 and 2 minutes.

24. A process according to claims 22 or 23, **characterized in that** the polymerization catalyst is a metal salt or metal complex, preferably of tin or bismuth, with a C₆-C₂₂ aliphatic carboxylic acid.

25. A process according to any of claims 22 to 24, **characterized in that** an IRGANOX type antioxidant, preferably with a phenolic structure, is added to the reaction mixture, or a TINUVIN type antioxidant, preferably stearically hindered amines or benzotriazoles.

26. A process according to any of claims 22 to 25, **characterized in that** the product is shaped by means of extrusion and cutting at a temperature comprised between 180º C and 230º C, and it is cooled so as to obtain hardened pearls and consisting of a transparent or opaque aspect.

27. The use of the ionomeric thermoplastic polyurethanes of claims 1 to 21 for obtaining aqueous dispersions thereof.

28. The use according to claim 27, **characterized in that** the aqueous dispersions have a solid content comprised between 30% and 60% by weight, preferably between 35% and 55% by weight, and a pH comprised between 6 and 10, preferably between 7 and 9.

29. A process for preparing the aqueous dispersions of the ionomeric thermoplastic polyurethanes of claims 1 to 21, **characterized in that** it comprises the following steps:
(A) dissolving the TPU in a water miscible organic solvent, heating if necessary for obtaining dissolution,
(B) adding water and an inorganic or organic base in sufficient quantity so that the pH of the final obtained dispersion is comprised between 6 and 10,
(C) distilling the organic solvent and adding more water until obtaining a dispersion with a solid content comprised between 30% and 60% by weight.

30. A process according to claim 29, **characterized in that** the water miscible organic solvent is selected from acetone, pyrrolidone, tetrahydrofurane and dimethylformamide.

31. A process according to claims 29 or 30, **characterized in that** the organic base of step (B) is selected from the C₁-C₆ chain aliphatic amines, such as triethylamine, eventually hydroxylated, aromatic amines and the heterocyclic compounds such as morpholine and piperidine.

32. A process according to claims 29 or 30, **characterized in that** the organic base of step (B) is selected from ammonium hydroxides or alkaline and/or alkaline-earth metal hydroxides, such as ammonium hydroxide, sodium hydroxide or potassium hydroxide, and/or from base-character salts, such as alkaline metal carbonates and bicarbonates.

33. A process according to any of claims 29 to 32, **characterized in that** a sufficient quantity of base and/or buffering agent is added so that the pH of the obtained aqueous dispersion is comprised between 7 and 9.

34. A process according to any of claims 29 to 33, **characterized in that** at the same time that the organic solvent is eliminated, more water is added to complete the volume, eventually with a non-ionic surfactant, up to reaching a dispersion with the desired solid content, which is preferably comprised between 35% and 55% by weight.
